Europäisches Patentamt

European Patent Office

Office européen des brevets

(11) Veröffentlichungsnummer: **0 557 810 A1**

## (12) EUROPÄISCHE PATENTANMELDUNG

(21) Anmeldenummer: **93102156.2**

(22) Anmeldetag: **11.02.93**

(51) Int. Cl.⁵: **B01J 19/00**, G05B 19/04

(30) Priorität: **19.02.92 DE 4205055**

(43) Veröffentlichungstag der Anmeldung:
**01.09.93 Patentblatt 93/35**

(84) Benannte Vertragsstaaten:
**AT BE CH DE FR GB IT LI NL SE**

(71) Anmelder: **SIEMENS AKTIENGESELLSCHAFT**
**Wittelsbacherplatz 2**
**D-80312 München(DE)**
Anmelder: **WACKER-CHEMIE GMBH**
**Hanns-Seidel-Platz 4**
**D-81737 München(DE)**

(72) Erfinder: **Hichert, Bernd, Dipl.-Ing.**
**Isolanistrasse 18**
**W-5000 Köln 71(DE)**
Erfinder: **Krummen, Helmut, Dipl.-Chem.**
**Walrafstrasse 4**
**W-5177 Titz-Gevelsdorf(DE)**
Erfinder: **Schmitz, Anton**
**In Neckerath 66**
**W-4047 Dormagen 11(DE)**
Erfinder: **Schröer, Ludger, Dipl.-Ing.**
**Erzstrasse 46**
**W-4300 Essen 14(DE)**
Erfinder: **Selig, Manfred, Dr. Dipl.-Chem.**
**Ringstrasse 24**
**W-5000 Köln 71(DE)**

(74) Vertreter: **Fuchs, Franz-Josef, Dr.-Ing.**
**Postfach 22 13 17**
**D-80503 München (DE)**

(54) Verfahren zum Steuern von in Schritte unterteilbaren Verfahrensabläufen, insbesondere von Chargenprozessen.

㊗ Zum Steuern von in Schritte unterteilbaren Verfahrensabläufen, insbesondere von Chargenprozessen, werden während mindestens einer Kriterienphase, die zusätzlich zu den Programmphasen vorhanden ist, Prozeßgrößen auf Erfüllung eines vorgegebenen Kriteriums überwacht. Bei Erfüllung des Kriteriums wird eine bestimmte Programmphase sowie der zugehörige Verfahrensschritt gestartet oder gestoppt. Für mehrere Kriterienphasen sind ein einziger universeller, Teilkriterien und deren Verknüpfung zum Kriterium enthaltender Programmbaustein sowie Parameter und die Prozeßgrößen gespeichert.
Die Erfindung wird angewandt zum Steuern von Chargenprozessen.

EP 0 557 810 A1

Zum Automatisieren von in Schritte unterteilbaren chemischen Verfahren, z. B. von Chargenprozessen, werden programmgesteuerte Prozeßleitsysteme eingesetzt, die nach Art von Schrittschaltwerken arbeiten. Den einzelnen Verfahrensschritten entsprechen Programmphasen, wobei verfahrenstechnisch ähnliche Verfahrensschritte durch gleichartige Programmphasen gesteuert werden. Das Programm kann daher modulartig aus wenigen Programmbausteinen aufgebaut werden. Die Steuerung der Anlage wird im allgemeinen in einzelne Apparate gegliedert. Zwischen den in den Apparaten ablaufenden Verfahrensschritten sind zum Beginn und zum Ende eines Verfahrensschrittes Koordinierungen notwendig. Vor allem in komplexen Chargenprozessen, z. B., wenn chemische Reaktionen stark exotherm ablaufen, genügen diese Koordinierungen häufig nicht; denn es kann, z. B. infolge von Rohstoffeinflüssen, leicht zu Änderungen und Verzögerungen im Ablauf des Prozesses kommen, die ein starres Schrittschaltwerk überfordern, mit der Folge, daß Produktqualität und Betriebssicherheit erheblich beeinträchtigt werden. Ein sicheres Beherrschen von solchen Unplanmäßigkeiten ist deshalb eine zwingende Voraussetzung sowohl für einen störungsfreien Betrieb als auch für eine gleichmäßige Produktqualität.

Der vorliegenden Erfindung liegt die Aufgabe zugrunde, ein Verfahren anzugeben, mit dem auch in komplexen Prozessen der genaue Zeitpunkt bestimmter einzelner Handlungen, insbesondere des Beginns oder der Beendigung eines Verfahrensschrittes, an den aktuellen Verfahrensabschnitt koppelbar ist. Der modulare Programmaufbau soll dabei erhalten bleiben.

Diese Aufgabe wird erfindungsgemäß mit den im kennzeichnenden Teil des Anspruchs 1 angegebenen Maßnahmen gelöst.

Die in den Kriterienphasen überwachten Kriterien bestehen im allgemeinen jeweils aus einer logischen Verknüpfung von mehreren Teilkriterien, die ihrerseits jeweils in einer logischen Beziehung, z. B. größer als, kleiner als, von aktuellen Meßwerten mit vorgegebenen Parametern bestehen. Zweckmäßig ist ein universeller Programmbaustein gespeichert, der in Verbindung mit den gespeicherten Parametern, aktuellen Prozeßgrößen und logischen Verknüpfungen für mehrere, vorzugsweise alle Kriterienphasen verwendet wird. Dieser Baustein ist daher apparateunabhängig. Gegenüber einem Verfahren, bei dem die Überwachung auf die Kriterien in den einzelnen Programmphasen erfolgt, ergibt sich dadurch eine Einsparung an Speicherplatz. Die Zeit für die Erfassung der aktuellen Prozeßgrößen wird dadurch verkürzt, daß diese zyklisch in ihrer Gesamtheit nur einmal erfaßt werden und nach ihrer Speicherung für sämtliche Kriterienphasen und auch die Programmphasen zur Verfügung stehen.

Die Kriterienphase kann vor, nach oder parallel zu jedem beliebigen Verfahrensschritt geschaltet werden. Mit ihrer Hilfe kann ein Verfahrensschritt beliebig in einen speziellen, vorgebbaren Prozeßzustand hineinkoordiniert werden, ohne daß die zugehörige Programmphase spezifisch auf einen bestimmten Prozeßzustand bzw. auf eine bestimmte Rezeptur und/oder einen bestimmten Apparat und/oder einen bestimmten Verfahrensschritt zugeschnitten werden muß.

Die Programmphasen können daher aus Programmbausteinen gebildet werden, die jeweils für mehrere gleichartige Programmphasen genutzt werden können. Dadurch ist auch die innere Komplexität der Programmphasen im Vergleich zu solchen Programmphasen verringert, die jeweils auf einen bestimmten Prozeßzustand zugeschnitten sind, da die im allgemeinen sehr aufwendige Koordinierungslogik nur einmal programmiert und mit allen Prozeßparametern und -größen versorgt werden muß. Mit dem neuen Verfahren wird die gesamte, insbesondere in Chargenprozessen oft sehr komplexe und rezeptspezifische Koordinierung in die universelle, apparateunabhängige Kriterienphase verlegt. Die eigentlichen Verfahrensschritte werden dadurch von Koordinierungsballast befreit. Dies gilt besonders dann, wenn, wie es in der Regel der Fall ist, mit einer Anlage eine Vielzahl von Produkten mit unterschiedlichen Verfahren hergestellt wird, die in ihrer Detailkoordinierung voneinander abweichen.

An einem Beispiel wird im folgenden die Erfindung mit Weiterbildungen und Ergänzungen näher beschrieben und erläutert.

Im folgenden ist als Ausschnitt eines Chargenprozesses eine einfache Folge von Verfahrensschritten angegeben:

FÜLLEN 1
FÜLLEN 2
RÜHREN 1
HEIZEN
KRIT 1
DOSIEREN 1
AUFDRÜCKEN
DOSIEREN 2 KRIT 2
RÜHREN 2

In den beiden ersten Verfahrensschritten wird ein Behälter mit zwei verschiedenen Stoffen gefüllt, die im dritten Schritt durch Rühren vermischt werden. Anschließend wird das Gemisch aufgeheizt, wodurch die beiden Stoffe zur Reaktion gebracht werden. Das Einsetzen und der Verlauf der Reaktion sind nicht exakt vorhersehbar, so daß die einzelnen Reaktionszustände zumindest zeitlich unbestimmt sind. Dennoch soll ein nachfolgender Dosiervorgang DOSIEREN 1 nur dann einsetzen, wenn ein bestimmter Prozeßzustand erreicht ist. Hierzu ist dem Schritt DOSIEREN 1 eine Kriterienphase KRIT 1 vorgeschaltet, mit der das Eintreten des bestimmten Prozeßzustandes überwacht wird. Ist dieser eingetreten, wird der Schritt DOSIEREN 1 gestartet. Die zugehörige Programmphase enthält keine weiteren Startbedingungen und ist damit von der Ermittlung des Prozeßzustandes entlastet. Für die Steuerung des Dosiervorganges kann daher ein Programmbaustein verwendet werden, mit dem auch andere Dosiervorgänge gesteuert werden, so daß für mehrere oder gar für alle Dosiervorgänge nur ein einziger Baustein erforderlich ist, der mit Parametern und aktuellen Prozeßgrößen aus einem gemeinsamen Datensatz versorgt wird. Die Parameter werden im allgemeinen schon vor Prozeßbeginn vorgegeben, die aktuellen Prozeßgrößen, wie Drücke, Temperaturen, Mengendurchflüsse usf., werden zyklisch erfaßt und in den gemeinsamen Datensatz eingetragen, aus dem auch die Kriterienphasen versorgt werden.

Nach dem Verfahrensschritt DOSIEREN 1 wird in einem Schritt AUFDRÜCKEN das Reaktionsprodukt unter Druck gesetzt, bevor ein zweiter Dosiervorgang DOSIEREN 2 einsetzt. Während die Kriterienphase KRIT 1 dazu dient, den Prozeßzustand zu bestimmen, bei dem der Dosiervorgang DOSIEREN 1 gestartet werden soll, wird mit einer zweiten Kriterienphase KRIT 2, die dem Schritt DOSIEREN 2 parallelgeschaltet ist, ein Prozeßzustand bestimmt, bei dem der Schritt DOSIEREN 2 beendet wird. Entsprechend kann mit einer parallelgeschalteten Kriterienphase der Lauf eines Verfahrensschrittes überwacht werden, indem bei Erfüllen oder bei Nicht-mehr-Erfüllen des eingestellten Kriteriums eine Meldung abgegeben oder der Verfahrensschritt abgebrochen wird. In dem oben angegebenen Beispiel wird der Dosiervorgang DOSIEREN 2 durch die Kriterienphase KRIT 2 beendet, und es schließt sich dann ein Rührvorgang RÜHREN 2 an.

In der folgenden Tabelle, die im Prinzip auf dem Bildschirm einer Bedieneinheit S eines einen Chargenprozeß steuernden Prozeßleitsystems dargestellt werden kann, wird die Kriterienphase KRIT 1 verdeutlicht:

| A | B | C | D | E |
|---|---|---|---|---|
| TK1 | MANTELTEMPERATUR | | 40 °C | UND |
| TK2 | REAKTIONSBEGINN | | 2,0 min | UND |
| TK3 | WÄRMEMENGE | | 0,2 GJ | |

Wie schon oben erwähnt, besteht das in der Kriterienphase überwachte Kriterium in einer logischen Verknüpfung von Einzelkriterien, die ihrerseits jeweils durch einen logischen Vergleich einer aktuellen Prozeßgröße mit einem vorgegebenen Parameter bestehen. In der obigen Tabelle enthält jede Zeile ein Teilkriterium. In der Spalte A sind die Nummern der Teilkriterien, in Spalte B Prozeßgrößen, in Spalte C Vergleichsoperationen, in Spalte D Parameter, mit denen die Prozeßgrößen verglichen werden, und in Spalte E logische Operationen für die logische Verknüpfung mit dem jeweils folgenden Teilkriterium angegeben. In diesem Beispiel ist das Kriterium erfüllt, wenn die Manteltemperatur den Mindestwert von 40 °C unterschritten hat und der Reaktionsbeginn mindestens 2,0 min vorbei ist, d. h. die Reaktion sicher eingesetzt hat, und die durch die Startreaktion freigesetzte Wärmemenge 0,2 GJ erreicht hat, d. h. ein gewisser Umsatz an Rohstoff erreicht ist. Ist dieses Kriterium erfüllt, ist die Kriterienphase, im Beispiel die Phase KRIT 1, abgeschlossen, und der nachfolgende Verfahrensschritt, im Beispiel der Dosiervorgang DOSIEREN 1, wird gestartet.

Jedes der Teilkriterien TK1, TK2, TK3 ist für sich bereits ein Hinweis auf den Reaktionsbeginn. Ihre UND-Verknüpfung stellt sicher, daß im Falle einer Abweichung einer Größe, wie sie z. B. durch eine Reglerschwankung auftreten kann, kein verfrühter Stoffzulauf einsetzt. Die Parameter der Startbedingungen lassen sich flexibel und transparent mittels einer Bedieneinheit einstellen, da das Einstellen in einem normierten Block von einem Bildschirm erfolgen kann.

Für die Kriterienphase KRIT 2 des oben angegebenen Beispiels kann ein entsprechend normierter Block verwendet werden, wobei selbstverständlich die Anzahl der Teilkriterien, die Prozeßgrößen, die Parameter, die Vergleichs- und logischen Operationen andere sind. Es können z. B. die Gesamtmenge des dosierten Stoffes, die Innentemperatur des Reaktionsbehälters und eine Zeit in Spalte A aufgeführt und damit die den Teilkriterien zugrundeliegende Prozeßgrößen sein, die mit vorgegebenen Parametern verglichen werden. Das Kriterium wird wieder durch die in Spalte E angegebenen logischen Verknüpfungen, z. B. UND, ODER, gebildet. Bei Erfüllung des Kriteriums wird der Dosiervorgang DOSIEREN 2 beendet. Entsprechend kann mittels einer parallelgeschalteten Kriterienphase ein Verfahrensschritt daraufhin überwacht werden, ob bestimmte Prozeßgrößen vorgegebene Parameter überschreiten und der überwachte Verfahrensschritt gegebenenfalls abgebrochen werden muß. Bei Erfüllung des Kriteriums wird demgemäß ein Meldesignal abgegeben bzw. ein Abschaltvorgang ausgelöst.

**Patentansprüche**

1.  Verfahren zum Steuern von in Schritte unterteilbaren Verfahrensabläufen, insbesondere von Chargenprozessen, bei dem ein das Verfahren steuerndes Programm den Verfahrensschritten entsprechende Programmphasen enthält, **dadurch gekennzeichnet,** daß während mindestens einer Kriterienphase, die zusätzlich zu den Programmphasen vorhanden ist, Prozeßgrößen auf Erfüllung eines vorgegebenen Kriteriums überwacht werden und daß bei Erfüllung des Kriteriums eine bestimmte Programmphase sowie der zugehörige Verfahrensschritt gestartet oder gestoppt werden.

2.  Verfahren nach Anspruch 1, **dadurch gekennzeichnet,** daß für mehrere Kriterienphasen ein einziger universeller, Teilkriterien und deren Verknüpfung zum Kriterium enthaltender Programmbaustein sowie Parameter und die Prozeßgrößen gespeichert sind.

3.  Verfahren nach Anspruch 1 oder 2, **dadurch gekennzeichnet,** daß die Kriterienphase zwischen zwei Programmphasen abläuft und daß bei Erfüllung des Kriteriums mit der auf die Kriterienphase folgenden Programmphase der dieser zugeordnete Verfahrensschritt gestartet wird.

4.  Verfahren nach Anspruch 1 oder 2, **dadurch gekennzeichnet,** daß die Kriterienphase einer Programmphase parallelgeschaltet ist und daß bei Erfüllung des Kriteriums der der Programmphase zugeordnete Verfahrensschritt abgebrochen wird.

5.  Verfahren nach einem der Ansprüche 1 bis 4, **dadurch gekennzeichnet,** daß die Kriterienphase einer Programmphase parallelgeschaltet ist und daß der der Programmphase zugeordnete Verfahrensschritt bei Erfüllung des Kriteriums beendet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-9 012 368 (E.I.DU PONT DE NEMOURS & CO.) <br> * das ganze Dokument * <br> --- | 1-5 | B01J19/00 <br> G05B19/04 |
| X | EP-A-0 335 628 (TAKEDA CHEMICAL INDUSTRIES, LTD.) <br> * das ganze Dokument * <br> --- | 1-5 | |
| X | AUTOMATISIERUNGSTECHNISCHE PRAXIS - ATP Bd. 29, Nr. 1, Januar 1987, MUNCHEN DE Seiten 17 - 23 R.J.UHLIG 'Erstellen von Ablaufsteuerungen für Chargenprozesse mit wechselnden Rezepturen' <br> * das ganze Dokument * | 1 | |
| A | | 2-5 | |
| | ----- | | |

**RECHERCHIERTE SACHGEBIETE (Int. Cl.5)**

B01J
G05B

Der vorliegende Recherchenbericht wurde für alle Patentansprüche erstellt

| Recherchenort | Abschlußdatum der Recherche | Prüfer |
|---|---|---|
| DEN HAAG | 24 MAI 1993 | STEVNSBORG N. |